# FASCICULE DE BREVET EUROPEEN

(11) **EP 2 651 750 B1**
(45) Date de publication et mention de la délivrance du brevet: **04.01.2017**
(21) Numéro de dépôt: 11802501.4
(22) Date de dépôt: 23.11.2011
(51) Int. Cl.: B62D 21/15, B60R 19/34, F16F 7/12

(54) **LONGERON DE BRANCARD D'UN VEHICULE A SECTION AMELIOREE.**
SEITENLÄNGSTRÄGER EINES FAHRGESTELLS MIT VERBESSERTEM QUERSCHNITT
VEHICLE CHASSIS FRAME SIDE RAIL OF IMPROVED CROSS SECTION

(30) Priorité: 14.12.2010 FR 1060454
(43) Date de publication de la demande: 23.10.2013
(73) Titulaire: Peugeot Citroën Automobiles SA, 78140 Vélizy Villacoublay (FR)
(72) Inventeur: GRALL, Loïc, F-78990 Elancourt (FR)
(86) Numéro de dépôt international: PCT/FR2011/052739
(87) Numéro de publication internationale: WO 2012/080607

(56) Documents cités:
- EP-A2- 1 970 260
- WO-A1-2005/120903
- DE-A1-102007 035 483
- US-A1- 2005 179 268
- US-A1- 2010 102 592

## Description

La présente invention concerne la structure d'un véhicule automobile. Plus précisément, elle concerne le brancard du véhicule, dont les longerons sont déformés quand le véhicule subit un choc frontal.

Quand un véhicule automobile subit un choc frontal important, en effet, les partis d'extrémité avant des longerons de son brancard, qui s'étendent dans la direction longitudinale du véhicule, sont déformés. Il est préférable, pour dissiper une partie importante de l'énergie du choc, que cette déformation se fasse sous la forme d'une compression longitudinale, ou bottelage, des longerons, dans laquelle des plis successifs en accordéon se forment dans des plans perpendiculaires à la direction longitudinale des longerons. De tels longerons sont par exemple divulgués dans le document DE 10 2007 035 483 A1.

Il est cependant courant que, lors du choc, un longeron se plie en s'éloignant de son axe longitudinal, une pliure formant un axe de rotation vertical entre deux portions du longeron. La déformation, dans ce cas, absorbe une quantité d'énergie du choc beaucoup moins importante. La protection du reste du véhicule, et notamment de l'habitacle dans lequel sont les passagers, est alors diminuée.

Pour stabiliser le bottelage des longerons en cas de choc, la forme et la taille de ces longerons sont généralement choisies pour leur conférer une inertie importante, et augmenter leur raideur transversale. Cependant, ces longerons à inertie renforcée présentent généralement une masse plus importante, et occupent plus de place que les longerons non renforcés. Le renforcement engendre donc une augmentation du coût de production des brancards, un alourdissement du véhicule engendrant une augmentation de sa consommation en carburant, et une taille plus importante rendant plus difficile l'implantation des différents composants du véhicule autour du brancard.

Par ailleurs, quand les longerons ne sont pas assez rigides transversalement et risquent de se déformer par rotation autour d'une ligne de pliage, ces longerons ne sont pas suffisants pour dissiper l'énergie d'un choc frontal, ce qui rend nécessaire la consolidation de l'habitacle du véhicule. Le poids du véhicule, et donc sa consommation en carburant, est alors augmenté, ainsi que son coût de fabrication.

La présente invention a pour objectif de pallier ces inconvénients de l'art antérieur.

En particulier, la présente invention a pour objectif de fournir un brancard de véhicule, notamment automobile, qui permette une dissipation importante de l'énergie lors d'un choc frontal du véhicule.

Un objectif particulier de l'invention est de fournir un tel brancard qui présente un poids et un encombrement relativement peu importants dans le véhicule et qui soit peu coûteux à fabriquer.

Ces objectifs, ainsi que d'autres qui apparaitront plus clairement par la suite, sont atteints à l'aide d'un longeron de brancard du châssis d'un véhicule, notamment automobile, conformément à l'objet de la revendication 1.

Avantageusement, chaque zone de jonction est constituée par une courbure de rayon supérieur ou égal à 12 mm, entre la portion de profilé formant la branche du U et la languette longitudinale de raccordement qui la prolonge.

Avantageusement, ladite courbure présente un rayon compris entre 15 mm et 19 mm.

Selon un autre mode de réalisation possible, chaque zone de jonction est constituée par un chanfrein entre la portion de profilé formant la branche du U et la languette longitudinale de raccordement qui la prolonge, l'angle formé entre la portion de profilé formant la branche du U et le chanfrein constituant l'une des charnières plastiques et l'angle formé entre le chanfrein et la languette longitudinale de raccordement constituant l'autre charnière plastique.

Avantageusement, la fixation par soudure des languettes est constituée par une succession de points de soudure.

L'invention concerne également un brancard du châssis d'un véhicule, notamment automobile, qui comprend deux longerons dont chacun est tel que décrit ci-dessus, et qui s'étendent longitudinalement vers l'avant.

L'invention concerne également un véhicule automobile comprenant un tel brancard.

D'autres caractéristiques et avantages de l'invention apparaîtront plus clairement à la lecture de la description qui suit d'un mode de réalisation illustratif et non limitatif, accompagné de dessins parmi lesquels :
- la figure 1 est une vue en perspective d'un longeron selon un mode de réalisation de l'invention ;
- la figure 2 est une vue en perspective du longeron de la figure 1 après un choc frontal du véhicule ;
- la figure 3 est une section transversale du longeron de la figure 1 ;
- la figure 4 est une section transversale schématique du longeron de la figure 1, avant et après un choc frontal du véhicule.

Lors d'un choc frontal d'un véhicule automobile, il est particulièrement important que les longerons formant l'avant du brancard, qui sont sollicités par compression longitudinale, se déforment selon un mode symétrique, afin qu'ils s'écrasent longitudinalement en accordéon, sans s'éloigner de leur axe longitudinal. Une telle déformation permet en effet une absorption efficace de l'énergie du choc.

Pour obtenir une déformation selon ce mode symétrique, il est généralement nécessaire que la structure du longeron ne soit pas déchirée par la déformation. Par exemple, il est nécessaire que cette déformation se fasse sans entraîner de rupture des soudures entre les éléments du longeron.

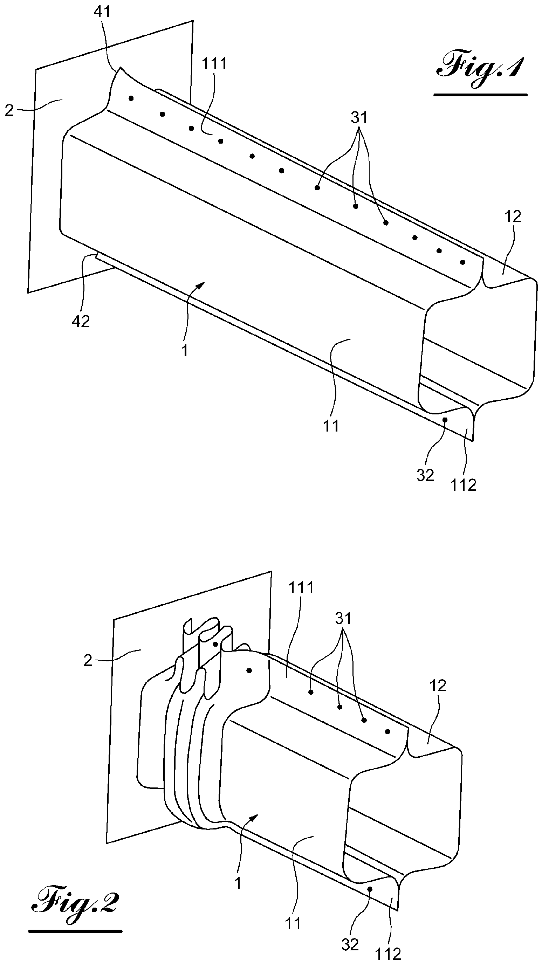

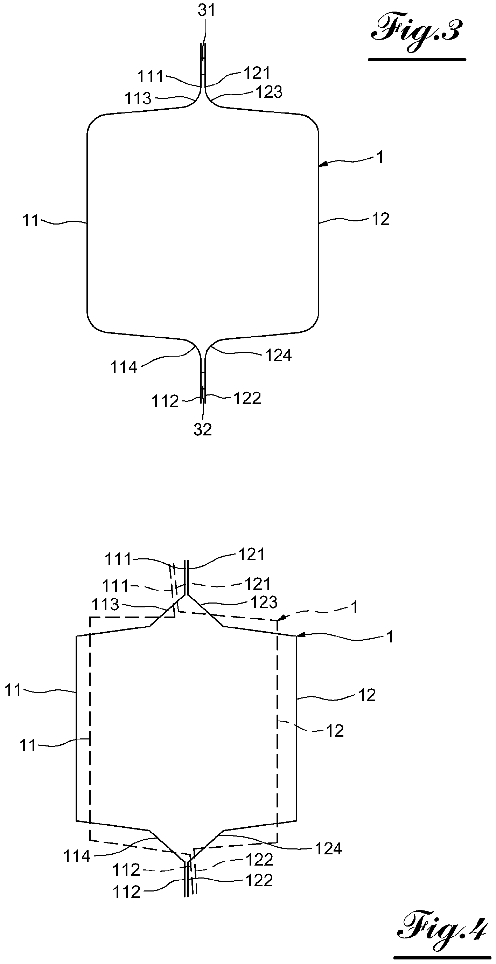

La figure 1 représente un longeron 1 formant l'avant du brancard d'un véhicule, se terminant par une platine 2. Comme le montre la section transversale de la figure 3, ce longeron 1 est formé par deux profilés en U, respectivement 11 et 12 assemblés l'un à l'autre par des points de soudure 31 formés entre des languettes longitudinales de raccordement supérieures, respectivement 111 et 121, des profilés 11 et 12, et des points de soudure 32 formés entre des languettes longitudinales de raccordement inférieures, respectivement 112 et 122, des profilés 11 et 12. Les languettes longitudinales de raccordement sont jointivement juxtaposées pour permettre ce soudage. Sur chaque profilé, ces languettes longitudinales de raccordement prolongent, sensiblement perpendiculairement, les extrémités des branches du U formées par le profilé.

Comme le montre la figure 3, les portions en U de chacun des profilés 11 et 12 formant le longeron 1 sont connectées aux languettes longitudinales de raccordement permettant la soudure des deux profilés par des zones de jonction 113, 114, 123 et 124 constituées par des courbures de rayon important.

Ce rayon, supérieur ou égal à 12 mm et pouvant être de l'ordre de 17 mm (+/- 2 mm), permet à la zone de jonction de se comporter, lors d'une déformation du longeron, comme un ensemble de deux charnières plastiques longitudinales plutôt que comme une charnière unique. Par « charnière plastique », on entend une ligne de pliage sur laquelle se produit une déformation plastique, donc irréversible, du matériau.

La figure 4 représente en trait plein une modélisation simplifiée de cette section transversale. Comme on peut le voir sur cette figure, les courbures entre les parties des profilés formant les bases des U et les parties formant les branches des U peuvent chacun être modélisés une charnière unique, représentée schématiquement par un angle. Ces courbures présentent en effet un rayon faible, par exemple de l'ordre de 6 mm.

Au contraire, les courbures 113, 123, 114 et 124 de fort rayon entre les parties de profilé formant les branches des U et les languettes longitudinales de raccordement sont chacune modélisées par deux charnières, c'est-à-dire par deux angles séparés par une portion de tôle. En effet, le rayon important de ces courbures permet l'apparition dans chacune de deux lignes de pliage distinctes et parallèles.

La présence des deux charnières plastique de chacune des zones de jonction 113 et 123 permet, lors de la déformation du longeron 1, d'éviter que les languettes longitudinales de raccordement supérieure, respectivement 111 et 121 soient éloignées l'une de l'autre en exerçant une traction sur les points de soudure 31 les assemblant. De même, La présence des deux charnières plastique de chacune des zones de jonction 114 et 124 permet, lors de la déformation du longeron, d'éviter que les languettes longitudinales de raccordement inférieures, respectivement 112 et 122 soient éloignées l'une de l'autre en exerçant une traction sur les points de soudure 32 les assemblant.

Quand le véhicule subit un choc frontal, le longeron 1 est écrasé comme le représente la figure 2. Au cours de cet écrasement, la section du brancard évolue, pour passer de la section représentée schématiquement en train continu à la section représentée schématiquement en pointillés sur la figure 4.

Au cours du choc, les charnières plastiques des zone de raccordement permettent une déformation du longeron ayant pour effet de maintenir les languettes longitudinales de raccordement les unes contre les autres, sans exercer de traction sur les points de soudage les liant. L'intégrité des points de soudure est ainsi préservée, ce qui évite une déformation dissymétrique du longeron 1.

Dans le mode de réalisation représenté, les zones de jonction entre les partie en U du profilé et les languettes longitudinales de raccordement sont réalisés par un courbures de rayon important. Selon d'autres modes de réalisation possibles de l'invention, il serait possible de remplacer ces courbures de rayon important par une zone de raccordement en forme de chanfrein, présentant deux angles formant chacun une charnière plastique, ou par des affaiblissements longitudinaux de la tôle des profilés, formant chacun une charnière plastique.

Pour que le longeron 1 se déforme en accordéon suivant une compression longitudinale, il est important que, sur une section transversale donnée, les languettes longitudinales de raccordement supérieure et inférieure se déforment en se déplaçant dans des directions différentes, les unes à droite et les autres à gauche. Ainsi, sur les représentations en pointillés de la section de la figure 4, les languettes longitudinales de raccordement supérieures 111 et 121 se déplacent vers la gauche quand les languettes longitudinales de raccordement inférieures 112 et 122 se déplacent vers la droite.

Pour amorcer cette déformation, et ainsi assurer une compression longitudinale correcte du longeron, les languettes longitudinales de raccordement respectivement supérieures et inférieures, sont penchées, respectivement vers la droite et vers la gauche, sur les derniers centimètres à l'avant du longeron. Ainsi, sur la figure 1, il est possible de voir que les languettes longitudinales de raccordement supérieures sont légèrement penchées vers la droite au niveau de la soudure 41 de l'extrémité de ces languettes à la platine 2. De même, les languettes longitudinales de raccordement inférieures sont légèrement penchées vers la gauche au niveau de la soudure 42 de l'extrémité de ces languettes à la platine 2.

## Revendications

1. Longeron de brancard du châssis d'un véhicule, notamment automobile, constitué de deux profilés (11, 12) à section transversale en U, fixés par soudure de languettes longitudinales de raccordement (111, 121, 112, 122) jointivement juxtaposées et prolongeant, sensiblement perpendiculairement, les extrémités des branches du U, chaque profilé présentant, entre chacune des languettes longitudinales de raccordement (111, 121, 112, 122) et la branches du U qu'elle prolonge, une zone de jonction (113, 123, 114, 124) formant deux charnières plastiques longitudinales distinctes, se déformant en cas de déformation du longeron (1) par compression longitudinale de manière à préserver l'intégrité de la fixation par soudure des languettes longitudinales de raccordement (111, 121, 112, 122), chaque zone de jonction (113, 123, 114, 124) étant constituée par une courbure de rayon supérieur ou égal à 12 mm, entre la portion de profilé formant la branche du U et les languettes longitudinales de raccordement (111, 121, 112, 122) qui la prolonge, **caractérisé en ce que** le longeron de brancard comprend une platine (2) fixée à son extrémité destinée à être à l'avant du véhicule, les deux bords d'extrémité de chaque languette longitudinale de raccordement (111, 121, 112, 122) d'un même profilé étant déformés en sens opposés l'un de l'autre au niveau de leur fixation (41, 42) à la platine (2), pour favoriser une déformation du longeron (1) en formant des plis en accordéon en sens opposés au niveau des deux languettes longitudinales de raccordement (111, 121, 112, 122), en cas de déformation par compression longitudinale.

2. Longeron de brancard selon la revendication 1, **caractérisé en ce que** ladite courbure présente un rayon compris entre 15 mm et 19 mm.

3. Longeron de brancard selon la revendication 2, **caractérisé en ce que** chaque zone de jonction est constituée par un chanfrein entre la portion de profilé formant la branche du U et les languettes longitudinales de raccordement (111, 121, 112, 122) qui la prolonge, l'angle formé entre la portion de profilé formant la branche du U et le chanfrein constituant l'une des charnières plastiques et l'angle formé entre le chanfrein et les languettes longitudinales de raccordement (111, 121, 112, 122) constituant l'autre charnière plastique.

4. Longeron de brancard selon l'une quelconque des revendications 1 à 3, **caractérisé en ce que** la fixation par soudure des languettes longitudinales de raccordement (111, 121, 112, 122) est constituée par une succession de points de soudure (31, 32).

5. Brancard du châssis d'un véhicule, notamment automobile, **caractérisé en ce qu'**il comprend deux longerons (1) dont chacun est conforme à l'une quelconque selon l'une quelconque des revendications 1 à 4, et qui s'étendent longitudinalement vers l'avant.

6. Véhicule automobile **caractérisé en ce que** comprend un brancard selon la revendication 5.

## Patentansprüche

1. Seitenlängsträger des Fahrgestells eines Fahrzeugs, insbesondere eines Kraftfahrzeugs, der aus zwei Profilen (11, 12) mit U-Querschnitt besteht, die durch Schweißen von Anschlusslängslaschen (111, 121, 112, 122), die bündig nebeneinander liegen und im Wesentlichen senkrecht die Enden der U-Schenkel verlängern, wobei jedes Profil zwischen jeder der Anschlusslängslaschen (111, 121, 112, 122) und dem Schenkel des U, den es verlängert, eine Verbindungszone (113, 123, 114, 124) aufweist, die zwei getrennte Kunststofflängsscharniere bildet, die sich bei Verformung des Längsträgers (1) durch Längskompression derart verformen, dass die Unversehrtheit der Befestigung durch Schweißen der Anschlusslängslaschen (111, 121, 112, 122) gewahrt wird, wobei jede Verbindungszone (113, 123, 114, 124) aus einem Krümmungsradius größer oder gleich 12 mm, zwischen dem Profilabschnitt, der den Schenkel des U bildet, und den Anschlusslängslaschen (111, 121, 112, 122), die ihn verlängern, besteht, **dadurch gekennzeichnet, dass** der Seitenlängsträger eine Platte (2) umfasst, die an seinem Ende befestigt ist, das dazu bestimmt ist, an der Vorderseite des Fahrzeugs zu liegen, wobei die zwei Endränder jeder Längsanschlusslasche (111, 121, 112, 122) ein und desselben Profils in entgegengesetzte Richtung zueinander im Bereich ihrer Befestigung (41, 42) an der Platte (2) verformt werden, um eine Verformung des Längsträgers (1) zu begünstigen, indem Akkordeonfalten in entgegengesetzte Richtungen im Bereich der zwei Anschlusslängslaschen (111, 121, 112, 122) bei Verformung durch Längskompression gebildet werden.

2. Seitenlängsträger nach Anspruch 1, **dadurch gekennzeichnet, dass** die Krümmung einen Radius zwischen 15 mm und 19 mm aufweist.

3. Seitenlängsträger nach Anspruch 2, **dadurch gekennzeichnet, dass** jede Verbindungszone aus einer Abfasung zwischen dem Profilabschnitt, der den Schenkel des U bildet und den Anschlusslängslaschen (111, 121, 112, 122), die ihn verlängern, besteht, wobei der Winkel, der zwischen dem Profilabschnitt, der den Schenkel des U bildet, und der Abfasung, die eines der Kunststoffscharniere bildet, und dem Winkel, der zwischen der Abfasung und den Anschlusslängslaschen (111, 121, 112, 122) gebildet wird, gebildet ist, das andere Kunststoffscharnier bildet.

4. Seitenlängsträger nach einem der Ansprüche 1 bis 3, **dadurch gekennzeichnet, dass** die Befestigung durch Schweißen der Anschlusslängslaschen (111, 121, 112, 122) aus einer Abfolge von Schweißpunkten (31, 32) besteht.

5. Längsträger des Fahrgestells eines Fahrzeugs, insbesondere eines Kraftfahrzeugs, **dadurch gekennzeichnet, dass** er zwei Längsträger (1) umfasst, von welchen jeder gemäß einem der Ansprüche 1 bis 4 ausgestaltet ist, und sich längs nach vorn erstreckt.

6. Kraftfahrzeug, **dadurch gekennzeichnet, dass** es einen Längsträger nach Anspruch 5 umfasst.

## Claims

1. A vehicle, notably a motor vehicle, chassis frame side rail (1), made up of two section pieces (11, 12) of U-shaped cross-section, welded together by longitudinal connecting tabs (111, 121, 112, 122) juxtaposed contiguously and more or less perpendicularly extending the ends of the branches of the U, each section piece having, between each of the longitudinal connecting tabs (111, 121, 112, 122) and the branches of the U that it extends, a connecting region (113, 123, 114, 124) that forms two separate longitudinal plastic hinges that deform if the side rail (1) is deformed by longitudinal compression so as to keep the welded joint between the longitudinal connecting tabs (111, 121, 112, 122) intact, each connecting region (113, 123, 114, 124) being made up of a radius of curvature greater than or equal to 12 mm, between the section piece portion forming the branch of the U and the longitudinal connecting tabs (111, 121, 112, 122) that extends it, **characterized in that** the chassis frame side rail includes a plate (2) fixed at its end intended to be at the front of the vehicle, the two end edges of each longitudinal connecting tab (111, 121, 112, 122) of the same section piece being deformed in opposite directions to one another at the level of their fixing (41, 42) to the plate (2), to promote a deformation of the side rail (1) by forming concertina folds in opposite directions at the level of the two longitudinal connecting tabs (111, 121, 112, 122), in the case of deformation by longitudinal compression.

2. The chassis frame side rail according to Claim 1, **characterized in that** said curvature has a radius comprised between 15 mm and 19 mm.

3. The chassis frame side rail according to Claim 2, **characterized in that** each connecting region is made up of a chamfer between the portion of section piece forming the branch of the U and the longitudinal connecting tabs (111, 121, 112, 122) which extend it, the angle formed between the portion of section piece forming the branch of the U and the chamfer constituting one of the plastic hinges and the angle formed between the chamfer and the longitudinal connecting tabs (111, 121, 112, 122) constituting the other plastic hinge.

4. The chassis frame side rail according to any one of Claims 1 to 3, **characterized in that** the fixing by welding of the longitudinal connecting tabs (111, 121, 112, 122) is made up of a succession of weld spots (31, 32).

5. A chassis frame of the chassis of a vehicle, notably a motor vehicle, **characterized in that** it includes two side rails (1), each of which is in accordance with any one according to any one of Claims 1 to 4, and which extend longitudinally toward the front.

6. A motor vehicle, **characterized in that** it includes a chassis frame according to Claim 5.
